# EUROPEAN PATENT SPECIFICATION

(11) **EP 3 968 609 B1**
(45) Date of publication and mention of the grant of the patent: **06.12.2023**
(21) Application number: 21790066.1
(22) Date of filing: 28.06.2021
(51) Int. Cl.: H04W 4/029, H04W 4/44, H04W 4/024, G07C 5/08, G07C 5/00, G06V 20/56, G01C 21/30, G01C 21/00

(54) **CONTROL METHOD, VEHICLE, AND SERVER**
STEUERUNGSVERFAHREN, FAHRZEUG UND SERVER
PROCÉDÉ DE COMMANDE, VÉHICULE ET SERVEUR

(30) Priority: 16.07.2020 CN 202010685584
(43) Date of publication of application: 16.03.2022
(73) Proprietor: Guangzhou Xiaopeng Autopilot Technology Co., Ltd., Guangzhou, Guangdong 510640 (CN)
(72) Inventor: CHAI, Wennan, Guangdong 510640 (CN); LIU, Zhongyuan, Guangdong 510640 (CN); GUANG, Xueling, Guangdong 510700 (CN); JIANG, Shaofeng, Guangdong 510640 (CN); LAI, Jianming, Guangdong 510700 (CN)
(74) Representative: Yip, Matthew Wing Yu
(86) International application number: PCT/CN2021/102846
(87) International publication number: WO 2022/012316

(56) References cited:
- EP-A1- 3 598 260
- WO-A1-2019/173315
- CN-A- 110 175 654
- CN-A- 110 287 803
- CN-A- 110 519 701
- CN-A- 110 962 843
- CN-A- 111 076 732
- CN-A- 111 885 138
- US-A1- 2020 064 846
- US-A1- 2020 088 525

## Description

The present application claims priority of Chinese patent application No. 202010685584.6, filed on 16 July 2020 and entitled "Control Method, Vehicle and Server".

### Technical Field

The present invention relates to the technical field of intelligent assisted driving of vehicles, and in particular to a control method, and a server.

### Background Art

Among the related technologies, vehicles are equipped with intelligent network connection functions, and vehicles have various sensors and high-performance processors and are connected with the cloud through the Internet to exchange all types of information, while intelligent navigation and autonomous parking in the parking lot have become new features of automatic driving of intelligent vehicles. How to use the various sensors of the vehicle to achieve the above functions has become a technical problem to be solved.

WO 2019/173315 A1 discloses systems and methods for anonymizing navigation data and generating an autonomous vehicle road navigation model with the anonymized data. A navigation system may receive data relating to a road section from a vehicle. The system may determine one or more motion representations associated with the vehicle and one or more road characteristics associated with the road section. The system may assemble navigation information relative to a first portion and relative to a second portion of the road section. The first and second portions may be spatially separated by a third portion. The system may transmit the navigation information relating to the first and second portions and forego transmitting information relating to the third portion. A server may receive the transmitted navigation information and assemble an autonomous vehicle road navigation model. The server may transmit the navigation model to one or more vehicles for use in autonomous navigation.

### Summary of the Invention

Embodiments of the present disclosure provide a control method, a computer readable medium with instructions and a server.

In accordance with the present invention, there are provided: a control method for a server as recited by claim 1, and a server as recited by claim 4. Preferred features are set out in the dependent claims.

In the above control method, a vehicle may identify a road section pattern of a parking lot through the sensor signal of the vehicle, and upload to a server corresponding relationship between road section patterns corresponding to all road section windows of a travelled route of the vehicle and the positioning route of the vehicle on a map of the parking lot, such that the server may form an effective database to provide support for intelligent navigation and autonomous parking of the vehicle.

Part of the additional aspects and advantages of the present invention will be given in the following description, and part of them will become apparent from the following description, or can be understood through the practice of the present invention.

### Brief Description of the Drawings

The foregoing and/or additional aspects and advantages of the present invention will become apparent and easily understood from the following description of the embodiments in combination with the accompanying drawings, wherein:
Fig. 1 to Fig. 4 are schematic diagrams of the flow of a control method of a vehicle in the embodiments of the present invention;
Fig. 5 is an exemplary diagram of a control method of a vehicle in the embodiments of the present invention;
Fig. 6 to Fig. 10 are schematic diagrams of the flow of a control method of a server in the embodiments of the present invention;
Fig. 11 is a schematic diagram of a module of a vehicle in the embodiments of the present invention;
Fig. 12 is a schematic diagram of a module of a server in the embodiments of the present invention.

### Detailed Description of the Embodiments

Embodiments of the present invention are described in detail below, and examples of the embodiments are shown in the accompanying drawings, wherein the same or similar reference numerals throughout the text indicate the same or similar elements or elements having the same or similar functions. The embodiments described below by reference to the accompanying drawings are exemplary and are intended to explain the present invention and should not be understood as limiting the present invention.

In the description of the embodiments of the present invention, the terms "first" and "second" are merely used for descriptive purposes and should not be understood as indicating or implying relative importance or implicitly specifying the number of indicated technical features. Therefore, the features defined with "first" and "second" may explicitly or implicitly include one or more of the described features. In the description of the embodiments of the present invention, the term "a plurality of" means two or more, unless otherwise expressly and specifically limited.

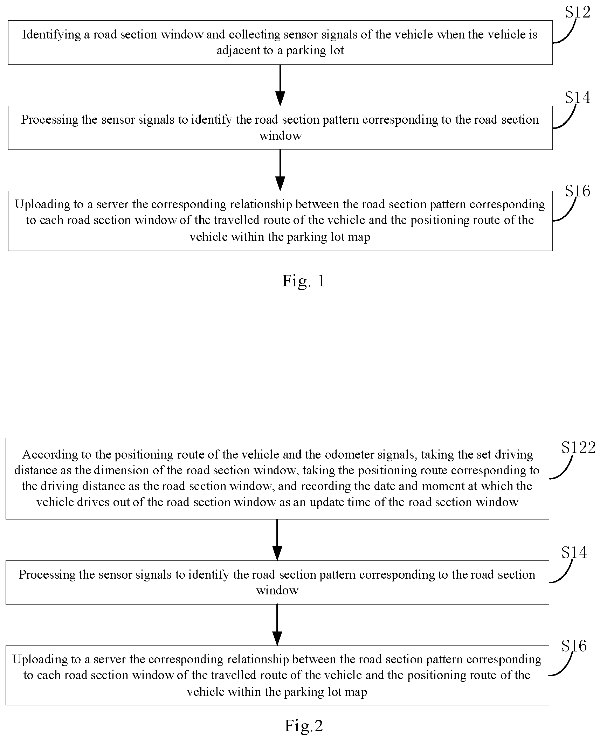

Please refer to Fig. 1, the control method of the embodiment of the present invention is used for vehicles, and the control method includes:
step S12: identifying a road section window and collecting a sensor signal of the vehicle when the vehicle is adjacent to a parking lot;
step S14: processing the sensor signal to identify a road section pattern corresponding to the road section window; and
step S16: uploading to a server corresponding relationship between road section patterns corresponding to all road section windows of a travelled route of the vehicle and the positioning route of the vehicle on a map of the parking lot.

In the above control method, the vehicle can identify a road section pattern of the parking lot through the sensor signal of the vehicle, and upload to a server corresponding relationship between road section patterns corresponding to all road section windows of a travelled route of the vehicle and the positioning route of the vehicle on a map of the parking lot, such that the server may form an effective database to provide support for intelligent navigation and autonomous parking of the vehicle.

In the related technology, when a database is built, the positioning route of a vehicle is identified based on real-time identification algorithm or only based on an identification algorithm of machine vision, as to the real-time identification algorithm, the computing amount is large, the occupied memory is large, and the requirement on the processor is high, and the identification algorithm based on machine vision mainly relies on a camera to obtain images, which is difficult to achieve efficient and accurate identification due to the diversity and complexity of the images. That is to say, the identification algorithm based on real-time identification algorithm and the identification algorithm merely based on machine vision have shortcomings, and the accuracy and reliability are relatively low.

As to the control method of the embodiment of the present invention, based on the identification algorithm of the road section window and multiple sensors, the positioning route of the vehicle is divided into a plurality of road section windows, and the multiple sensors and the high-performance processor equipped on the vehicle are used to collect and process the sensor signal of the vehicle in each road section window, so as to efficiently and accurately identify a road section pattern of the parking lot and form an effective database at the server.

Specifically, please refer to Fig. 2, in step S12, in some embodiments, the sensor signal includes an odometer signal, and step S12 includes: step 122: according to the positioning route of the vehicle and the odometer signal, taking a set driving distance as a dimension of the road section window, taking the positioning route corresponding to the driving distance as the road section window, and recording the date and time when the vehicle drives out of the road section window as the update time of the road section window.

In this way, the positioning route of the vehicle is divided into a plurality of road section windows, to facilitate the collection of the sensor signal of the vehicle. Further, for each road section window, corresponding to the time when the vehicle drives into the road section window and the time when the vehicle drives out of the road section window, the date and time when the vehicle drives out of the road section window are recorded, thereby being conducive to the subsequent management of the road section window.

In step S14, said processing the sensor signal includes extracting a sensor signal which helps to identify a road section pattern corresponding to the road section window, calculating a feature value corresponding to the sensor signal, and determining the road section pattern corresponding to the road section window according to the feature value. The processing of the sensor signal may occur after the vehicle drives out of one road section window or after the vehicle drives out of all the road section windows. It should be noted that each road section window includes a plurality of respectively independent road section patterns, and step S14 includes processing the sensor signal to identify each road section pattern corresponding to the road section window.

In step S16, the data uploaded to the server includes the date and time when the vehicle drives out of each road section window, i.e., the update time of the road section window, the latitude and longitude altitude information of each road section window, the road section pattern corresponding to each road section window, and the positioning route of the vehicle on a map of the parking lot. The manner of uploading can be to upload the driving route of the vehicle as a whole or to upload the driving route of the vehicle separately in the form of a plurality of road section windows.

In an example, the driving distance of 10 meters is set as the dimension of the road section window, i.e., according to the odometer signal, the vehicle identifies the corresponding positioning route as a road section window for every 10 meters of driving, collects the sensor signal of the vehicle within this 10 meters, processes the sensor signal to identify a road section pattern corresponding to the road section window, and then uploads to a server corresponding relationship between road section patterns corresponding to all road section windows of a travelled route of the whole vehicle and the positioning route of the vehicle on a map of the parking lot.

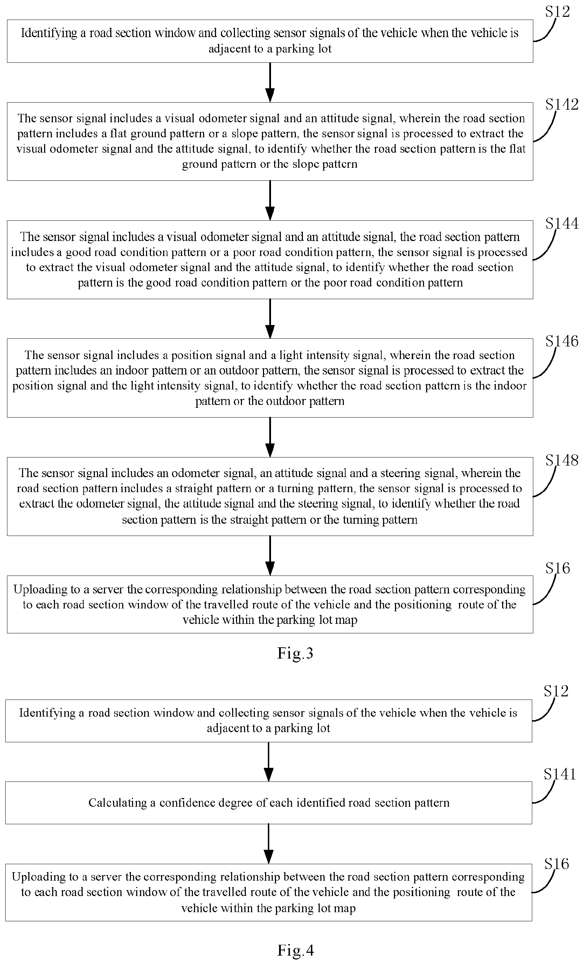

Please refer to Fig. 3, in some embodiments, step S14 includes:
step S142: the sensor signal includes a visual odometer signal and a gesture signal, wherein the road section pattern includes a flat ground pattern or a slope pattern, the sensor signal is processed to extract the visual odometer signal and the gesture signal, to identify whether the road section pattern is the flat ground pattern or the slope pattern; or
step S144: the sensor signal includes an odometer signal, a gesture signal and a steering signal, wherein the road section pattern includes a straight pattern or a turning pattern, the sensor signal is processed to extract the odometer signal, the gesture signal and the steering signal, to identify whether the road section pattern is the straight pattern or the turning pattern; or
step S146: the sensor signal includes a visual odometer signal and a gesture signal, the road section pattern includes a good road condition pattern or a poor road condition pattern, the sensor signal is processed to extract the visual odometer signal and the gesture signal, to identify whether the road section pattern is the good road condition pattern or the poor road condition pattern; or
step S148: the sensor signal includes a position signal and a light intensity signal, wherein the road section pattern includes an indoor pattern or an outdoor pattern, the sensor signal is processed to extract the position signal and the light intensity signal, to identify whether the road section pattern is the indoor pattern or the outdoor pattern.

In this way, the road section pattern of the parking lot can be accurately identified through the extraction of different sensor signals. Specifically, the visual odometer signal may be obtained from a visual sensor, and the visual odometer yaw angle mean value and the visual odometer pitch/roll angle standard deviation may be obtained through calculation. The gesture signal may be obtained by a gyroscope and an accelerometer, and the pitch angle mean value, the yaw angle speed mean value, the pitch/roll angle speed standard deviation, the downward acceleration mean value, and the acceleration standard deviation may be obtained through calculation. The position signals may be obtained from satellite positioning sensors (e.g., GPS sensors), and the satellite signal strength mean value and the satellite positioning accuracy mean value (e.g., GPS positioning accuracy mean value) may be obtained through calculation. The steering signal may be obtained through a wheel speed meter and an electronic power steering (EPS) sensor, and the speed standard deviation and the EPS angle mean value may be obtained through calculation. The light intensity signals may be obtained from light sensors, and the light intensity standard deviation may be obtained through calculation.

Further, in combination with Table 1, in step S142, whether the road section pattern is a flat ground pattern or a slope pattern can be identified through the visual odometer yaw angle mean value, the pitch angle mean value and the downward acceleration mean value. Each sensor signal corresponding to the flat ground pattern is weaker than each sensor signal corresponding to the slope pattern.

In step S 144, whether the road section pattern is a straight pattern or a turning pattern can be identified through the visual odometer yaw angle mean value, the pitch angle mean value, the speed standard deviation and the EPS angle mean value. Each sensor signal corresponding to the straight pattern is weaker than each sensor signal corresponding to the turning pattern.

In step S 146, whether the road section pattern is a good road condition pattern or a poor road condition pattern can be identified through the visual odometer pitch/roll angle standard deviation, pitch/roll angle speed standard deviation and acceleration standard deviation. Each sensor signal corresponding to the good road condition pattern is weaker than each sensor signal corresponding to the poor road condition pattern.

In step S 148, whether the road section pattern is an indoor pattern or an outdoor pattern can be identified through the satellite signal strength mean value, the satellite positioning accuracy mean value (e.g., the GPS positioning accuracy mean value) and the light intensity standard deviation. Each sensor signal corresponding to the indoor pattern is weaker than each sensor signal corresponding to the outdoor pattern.

**Table 1**

| Road section pattern | Features used for identification of road section pattern | Sensors used for identification |
|---|---|---|
| Flat ground/slope | Visual odometer yaw angle mean value, pitch angle mean value and downward acceleration mean value | Visual sensors, gyroscopes, accelerometers |
| Straight/turning | Visual odometer yaw angle mean value, yaw angle speed mean value, speed standard deviation and EPS angle mean value | Visual sensors, gyroscopes, wheel speed meters, EPS sensors |
| Good road condition/poor road condition | Visual odometer pitch/roll angle standard deviation, pitch/roll angle speed standard deviation, and acceleration standard deviation | Visual sensors, gyroscopes, accelerometers |
| Indoors/outdoors | Satellite signal strength mean value, satellite positioning accuracy mean value (e.g., GPS positioning accuracy mean value), and light intensity standard deviation | Satellite positioning sensors (e.g., GPS sensors), light sensors |

It should be noted that the above flat ground and slope patterns, the straight and turning patterns, the good and poor road condition patterns, and the indoor and outdoor patterns are four respectively independent road section patterns, i.e., each road section window includes four respectively independent road section patterns, and in other embodiments, each road section window may include three, five, six, or other non-four respectively independent road section patterns. Further, in the embodiment of Fig. 3, step S142 is performed first, followed by step S144, then followed by step S146, and finally by step S148, and in other embodiments, step S144 may be performed first, followed by step S142, then followed by step S148, and finally by step S146, and step S142, step S144, step S146, and step S148 may also be performed in other orders, which are not specifically defined herein.

Please refer to Fig. 4, in some embodiments, step S14 includes:
step S 141: calculating a confidence level for each identified road section pattern;
the corresponding relationship includes the corresponding relationship between the confidence level for the road section pattern and the positioning route.

In this way, a confidence level for the identification result of each road section pattern is obtained. Specifically, the confidence level is calculated based on the features used for road section pattern identification, for example, the confidence level for the flat ground pattern is calculated based on the visual odometer yaw angle mean value, the pitch angle mean value and the downward acceleration mean value, the confidence level for the straight pattern is calculated based on the visual odometer yaw angle mean value, the yaw angle speed mean value, the speed standard deviation and the EPS angle mean value, the confidence level for the good road condition pattern is calculated based on the visual odometer pitch/roll angle standard deviation, the pitch/roll angle speed standard deviation and the acceleration standard deviation, and the confidence level for the indoor pattern is calculated based on the satellite signal strength mean value, GPS positioning accuracy mean value and light intensity standard deviation.

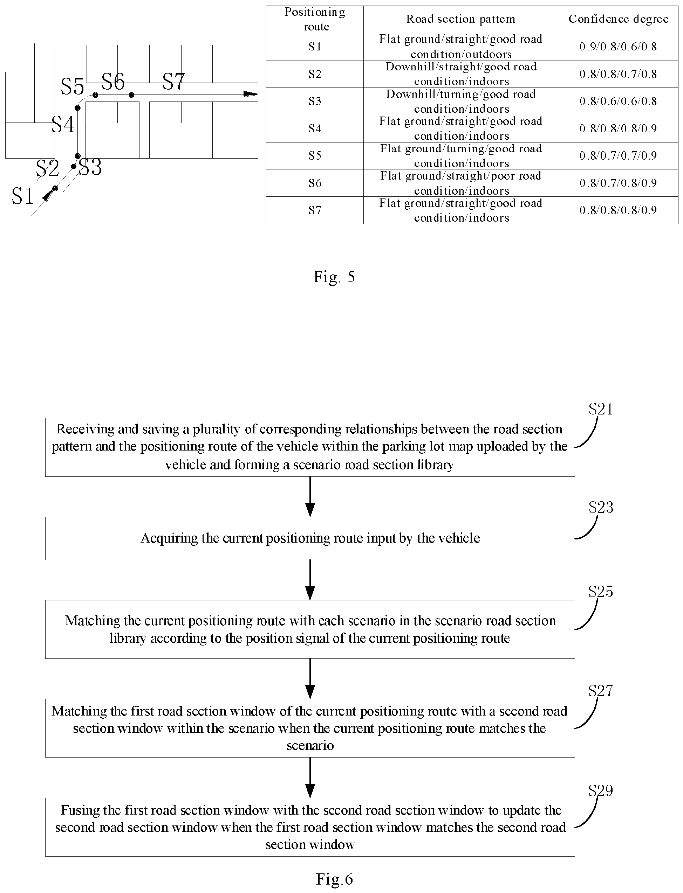

The numerical value of confidence level is greater than 0 and less than 1, i.e., the confidence level can be 0.1, 0.5, 0.9 or other numerical values between 0 and 1. In the process of identifying the road section pattern, the more the features used for identification match the corresponding road section pattern, the larger the numerical value of the confidence level. Referring to Fig. 5, in the embodiment shown in Fig. 5, the positioning route of the vehicle includes S1, S2, S3, S4, S5, S6, and S7 parts, each part of the positioning route includes one or more road section windows, and each part of the positioning route includes one or more of the four respectively independent road section patterns. Wherein, both route S1 and route S4 include the flat ground pattern, and the corresponding confidence levels are 0.9 and 0.8, respectively, that is, compared with the route S4, the visual odometer yaw angle mean value, the pitch angle mean value and the downward acceleration mean value of the route S1 are more consistent with the description of the flat ground pattern, that is, the identification result with the route S1 being the flat ground pattern is more confident than the identification result with the route S4 being the flat ground pattern. In addition, the confidence level for each road section pattern can be calculated while identifying each road section pattern, and after the confidence level for each road section pattern is calculated, the corresponding relationship between the road section pattern corresponding to each road section window of the travelled route of the vehicle and the positioning route of the vehicle on a map of the parking lot is uploaded to a server.

In an example, the confidence level for the flat ground pattern is calculated based on the visual odometer yaw angle mean value, the pitch angle mean value, and the downward acceleration mean value and using the empirical threshold method and the supervised machine learning method.

In combination with Fig. 6, the control method in the embodiment of the present invention is used for a server, and the control method includes:
step S21: receiving and saving a plurality of corresponding relationships between road section patterns and positioning route of the vehicle on a map of the parking lot uploaded by the vehicle and forming a scenario road section library;
step S23: acquiring the current positioning route input by the vehicle;
step S25: matching the current positioning route with each scenario in the scenario road section library according to the position signal of the current positioning route;
step S27: matching the first road section window of the current positioning route with a second road section window within a scenario when the current positioning route matches the scenario; and
step S29: merging the first road section window with the second road section window to update the second road section window when the first road section window matches the second road section window.

In the above control method, the server can receive the corresponding relationship between the road section pattern corresponding to each road section window of the travelled route of the vehicle and the positioning route of the vehicle on a map of the parking lot uploaded by the vehicle, such that the server may form an effective database to provide support for intelligent navigation and autonomous parking of the vehicle.

Specifically, in step S21, the scenario road section library includes a plurality of scenarios, and each scenario includes a corresponding relationship between the positioning route of the vehicle within the parking map and the update time of each road section window, the position signal of each road section window, the road section pattern and the confidence level corresponding to each road section window.

In step S23, the current positioning route input by the vehicle is just the newly received positioning route of the vehicle with a plurality of corresponding relationships on a map of the parking lot.

In step S25, the position signal of the current positioning route includes latitude and longitude altitude information, and by comparing the latitude and longitude altitude information, whether a scenario matching the current positioning route exists in a scenario section library can be determined.

In step S27, the current positioning route includes a plurality of first road section windows, and the scenario also includes a plurality of second road section windows, and the matching the first road section windows of the current positioning route with the second road section windows within the scenario includes: based on the latitude and longitude altitude information, each first road section window within the current positioning route is matched with each second road section window within the scenario in turn.

In step S29, the merging the first road section window with the second road section window includes: performing weighted average on the position signals, the road section patterns, and the confidence level for the road section pattern merging the first road section window with the second road section window, wherein the weight is the maturity level, the maturity level is positively correlated with the number of times when the road section window is merged, and the maturity level is an integer greater than 0. Specifically, the maturity level of all the first road section windows is 1, and the maturity level of the second road section window is an integer equal to or greater than 1. For each occurrence of merger of the road section windows, the maturity level of the second road section window is added by 1, i.e., the difference between the maturity level of the second road section window and the number of mergers of the second road section window is 1. The greater the number of mergers of the second road section window, the greater the numerical value of the maturity level of the second road section window.

Further, the merger of the position signals of the first road section window and the second road section window is a weighted average based on maturity levels, the merger of the road section patterns of the first road section window and the second road section window is a weighted average based on maturity levels, and the merger of the confidence levels of the road section patterns of the first road section window and the second road section window is a weighted average based on maturity levels. Wherein the weight of the first road segment window is 1 and the weight of the second road segment window is the maturity level of the second road segment window. The confidence level for the road segment pattern of the second road segment window after merger is calculated as follows: confidence level = (confidence level for the road segment pattern of the first road segment window * 1 + confidence level for the road segment pattern of the second road segment window * maturity level of the second road segment window)/(1 + the maturity level of the second road segment window).

In addition, the updating the second road section window within the scenario includes updating the update time of the second road section window, the position signal, and the road section pattern and confidence level corresponding to the second road section window, wherein the update time of the second road section window after update is changed to the update time of the first road section window in the current positioning route.

In an example, the confidence level for the flat ground pattern of the first road section window is 0.9, the maturity level of the first road section window is 1, the confidence level for the flat ground pattern of the second section window is 0.7, and the maturity level of the second road section window is 3, then the flat ground pattern of the second road section window after merger is (0.9*1+0.7*3)/(1+3)=0.75.

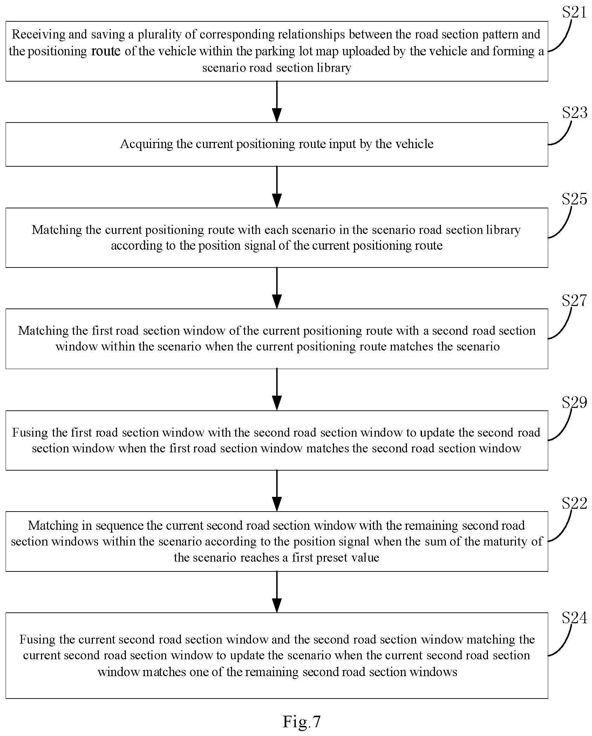

In combination with Fig. 7, in some embodiments, the scenario includes a plurality of second road section windows, each of the second road section windows has a corresponding maturity level, and the control method includes:
step S22: matching in sequence a current second road section window against the remaining second road section windows within the scenario according to the position signal when the sum of the maturity level of the scenario reaches a first preset value;
step S24: merging the current second road section window and the second road section window matching the current second road section window to update the scenario when the current second road section window matches one of the remaining second road section windows.

In this way, the new road section windows added to the scenario due to mismatching can be matched and merged again. It can be understood that for a road section window A in the positioning route Z, when the positioning route Z is just input to the server, the positioning route Z is matched with the scenario Y in the scenario road section library based on the position signal, and as to the road section window A, the road section window matched based on the position signal does not exist in the scenario Y, at this time, the road section window A is saved in the scenario Y as a new road section window. Along with an increase of the maturity level of the road section window A, the position signal of road section window A may change, i.e., the road section window A may gradually approach the road section window B in the scenario Y and can be matched and merged with the road section window B. Therefore, the second road section window is matched and merged again after the sum of the maturity level of the second road section window reaches the first preset value.

Specifically, in step S24, based on the maturity level, the second road section window and the position signals, the road section patterns, and the confidence level for the road section pattern of the second road section window matched with the current second road section window are merged to update the scenario. It should be noted that when the maturity level of both the current second road section window and the second road section window matched with the current second road section window is not equal to 1, the update time of the merged second road section window is the later of the current second road section window and the second road section window matched with the current second road section window.

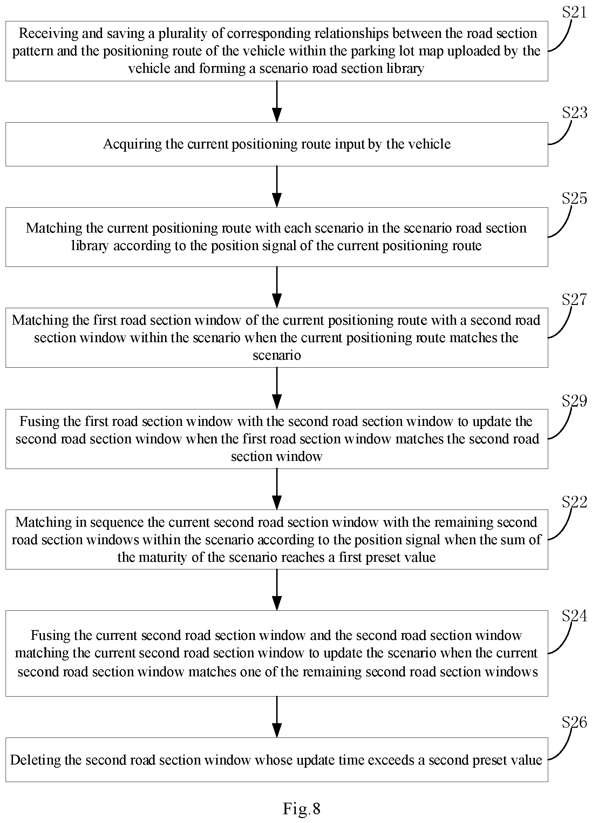

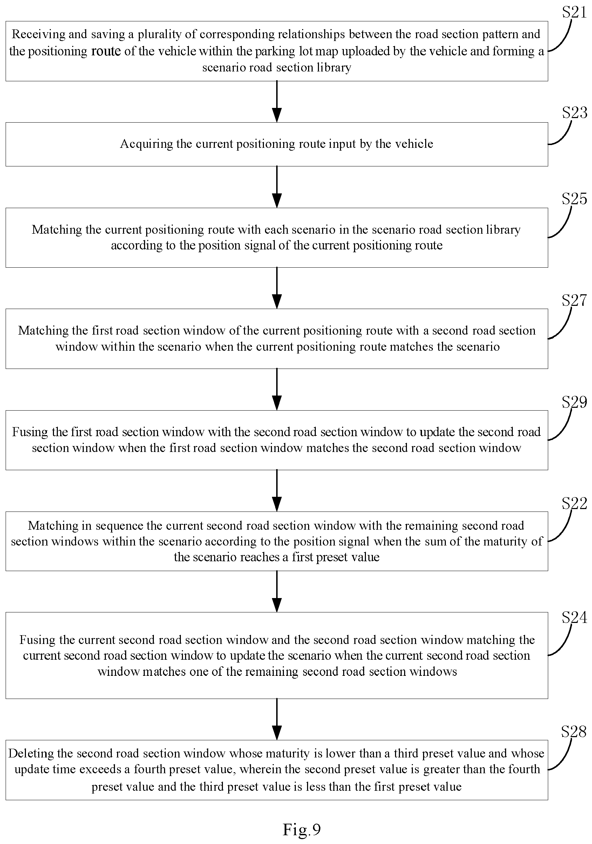

Please refer to Fig. 8, in some embodiments, each of the second road section windows has a corresponding update time, and the control method includes:
step S26: deleting second road section windows whose update time exceeds a second preset value, or
please refer to Fig. 9, and the control method includes:
   step S28: deleting second road section windows whose maturity levels are lower than a third preset value and whose update time exceeds a fourth preset value, wherein the second preset value is greater than the fourth preset value and the third preset value is less than the first preset value.

In this way, the storage space can be saved, the computing amount can be reduced, and the computing speed can be improved. It can be understood that the road section window occupies a certain storage space, and in the process of matching the road section window, all the road section windows within the scenario should be traversed, and the more the road section windows within the scenario, the larger the computing amount needed during matching, therefore, when the update time of the second road section window or the maturity level and the update time reach certain conditions, the second road surface window is deleted.

Specifically, when the scenario environment changes and the road section window information is outdated, or when the road section window is positioned with a large error and cannot be matched and merged with other road section windows, the update time of the second road section window may exceed the second preset value, or the maturity level of the second road section window may be less than the third preset value and the update time may exceed the fourth preset value.

In an example, the first preset value is 20, the second preset value is 15 days, the third preset value is 3, and the fourth preset value is 10 days. After the sum of the maturity level of the scenario reaches 20, the road section windows within the scenario will be matched and merged again to update the scenario. After the update time of the road section windows in the scenario exceeds 15 days, the road section windows will be removed from the scenario to save the storage space. When the maturity level of the road section windows in the scenario is lower than 3, after the update time of the road section windows exceeds 10 days, the road section windows will be deleted from the scenario to save storage space.

It should be noted that the specific numeral values mentioned above are merely intended as examples to illustrate in detail the implementation of the present invention and should not be construed as limiting the present invention. In other instances, embodiments or examples, other numerical values may be selected according to the present invention and are not specifically defined herein.

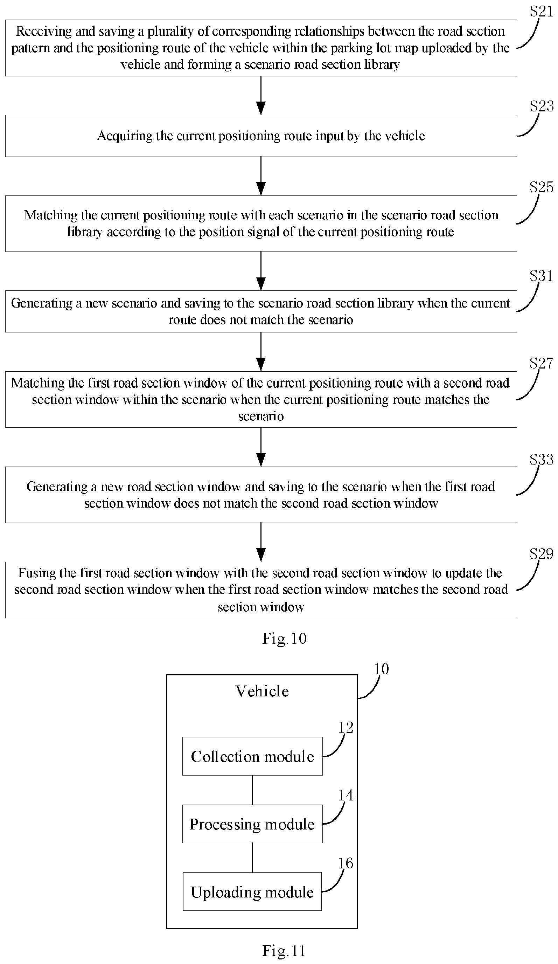

Please refer to Fig. 10, in some embodiments, the control method includes:
step S31: generating a new scenario and saving to the scenario road section library when the current route does not match the scenario; and
step S33: generating a new road section window and saving to the scenario when the first road section window does not match the second road section window.

In this way, it is beneficial to improve the scenarios and build an effective scenario road section library. Specifically, the maturity level of the generated new road section window is 1.

In combination with Fig. 11, the vehicle 10 of the embodiment of the present invention includes a collection module 12, a processing module 14 and an uploading module 16. The collection module 12 is configured to collect a sensor signal of the vehicle 10 with a road section window when the vehicle 10 is adjacent to a parking lot. The processing module 14 is configured to process the sensor signal to identify a road section pattern corresponding to the road section window. The uploading module 16 is configured to upload to a server corresponding relationship between road section patterns corresponding to all road section windows of a travelled route of the vehicle 10 and the positioning route of the vehicle 10 on a map of the parking lot.

In the above vehicle 10, the vehicle 10 can identify a road section pattern of the parking lot through the sensor signal of the vehicle 10, and upload to a server corresponding relationship between road section patterns corresponding to all road section windows of a travelled route of the vehicle 10 and the positioning route of the vehicle 10 on a map of the parking lot, such that the server can form an effective database to provide support for the intelligent navigation and autonomous parking of the vehicle 10.

It should be noted that the above explanatory description of the beneficial effects of the embodiments of the control method for the vehicle and the embodiments of the control method for the server are also applicable to the vehicle 10 and the server of the following embodiments, and will not be expanded in detail herein to avoid redundancy.

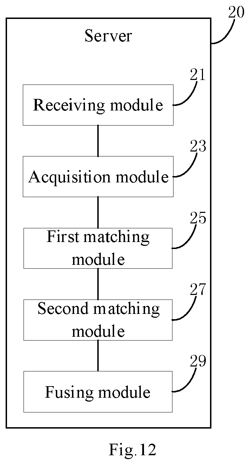

In combination with Fig. 12, the server 20 of the embodiment of the present invention includes a receiving module 21, an acquisition module 23, a first matching module 25, a second matching module 27 and a merging module 29. The receiving module 21 is configured to receive and save a plurality of corresponding relationships between road section patterns and positioning route of the vehicle 10 on a map of the parking lot uploaded by the vehicle 10 and form a scenario road section library. The acquisition module 23 is configured to acquire the current positioning route input by the vehicle. The first matching module 25 is configured to match the current positioning route with each scenario in the scenario road section library according to the position signal of the current positioning route. The second matching module 27 is configured to match the first road section window of the current positioning route with a second road section window within a scenario when the current positioning route matches the scenario. The merging module 29 is configured to merge the first road section window with the second road section window to update the second road section window when the first road section window matches the second road section window.

In the above server 20, the server 20 can receive the corresponding relationship between the road section pattern corresponding to each road section window of the travelled route of the vehicle 10 and the positioning route of the vehicle 10 on a map of the parking lot uploaded by the vehicle 10, such that the server 20 may form an effective database to provide support for intelligent navigation and autonomous parking of the vehicle 10.

Specifically, the vehicle 10 may be connected to the server 20 via wireless communication means (e.g., WIFI, mobile communication network, etc.) In some embodiments, the vehicle may upload a positioning route with road section patterns to the server 20 for constructing a parking lot map, or may acquire the parking lot map with road section patterns in the server 20 for intelligent navigation and autonomous parking in the parking lot. In an example, the vehicle 10 acquires the parking lot map with road section pattern in the server 20 for long-distance autonomous parking, and the whole vehicle controller of the vehicle 10 can control the vehicle 10 to slow down when the vehicle 10 approaches the road section with turning/downhill/poor road conditions; the whole vehicle controller of the vehicle 10 can control the vehicle 10 to accelerate when the front is a road section which is straight/good in road conditions; when the road section is outdoors, GPS positioning is mainly selected, and when the road section is indoors, visual odometer positioning is mainly used.

In the description of the present specification, the description with reference to the terms "an embodiment", "some embodiments", "examples", "specific examples", or "some examples" means that specific features, structures, materials, or characteristics described in combination with the embodiments or examples are included in at least one embodiment or example of the present invention. In the present specification, the schematic presentation of the above terms need not be directed to the same embodiment or example. Moreover, the described specific features, structures, materials, or characteristics may be combined in a suitable manner in any one or more embodiments or examples. In addition, without conflicting with each other, those skilled in the art may combine the different embodiments or examples described in the present specification and the features of the different embodiments or examples.

In addition, the terms "first" and "second" are merely used for descriptive purposes and are not to be construed as indicating or implying relative importance or implicitly specifying the number of indicated technical features. Therefore, the features defined with "first" and "second" may explicitly or implicitly include at least one such feature. In the description of the present invention, the term "a plurality of" means at least two, such as two, three, etc., unless otherwise expressly and specifically defined.

Any process or method description in the flowchart or otherwise described herein may be understood to represent a module, a fragment, or a portion of codes including one or more executable instructions for implementing steps of a particular logical function or process, and the scope of the preferred embodiment of the present invention includes additional implementations, wherein the functions may not be performed in the order shown or discussed, including the order according to the functions involved in a substantially simultaneous manner or in a reverse order, as should be understood by those skilled in the art to which the embodiments of the present invention belong.

## Claims

1. A control method for a server, comprising:
receiving and saving (S21) a plurality of corresponding relationships between road section patterns and a positioning route of a vehicle on a map of a parking lot, said plurality of corresponding relationships uploaded by the vehicle, for each of a plurality of positioning routes, wherein a road section pattern corresponds to a road section window of a travelled route of the vehicle;
forming a scenario road section library, wherein the scenario road section library comprises a plurality of scenarios, and each scenario comprises said plurality of corresponding relationships for each respective positioning route;
acquiring (S23) a current positioning route input by the vehicle, the input including a plurality of corresponding relationships between road section patterns and the current positioning route,
wherein said current positioning route comprises a plurality of first road section windows;
comparing (S25) the current positioning route against each scenario in the scenario road section library based on a position signal of the current positioning route to determine if the current positioning route matches a scenario, wherein the scenario comprises a plurality of second road section windows;
when the current positioning route matches a scenario, comparing (S27) each of the plurality of first road section windows of the current positioning route against each of the plurality of second road section windows within the scenario; and
merging (S29) the first road section windows with the second road section windows to update the second road section windows when the first road section windows match the second road section windows;
wherein each of the second road section windows within the scenario has a corresponding maturity level, and the control method comprises:
when the sum of the maturity level of the scenario reaches a first preset value, comparing (S22) in sequence a current second road section window against the remaining second road section windows within the scenario based on the position signal; and
when the current second road section window matches one of the remaining second road section windows, merging (S24) the current second road section window and the second road section window matching the current second road section window to update the scenario.

2. The control method of claim 1, wherein each of the second road section windows has a corresponding update time, and the control method comprises:
deleting (S26) second road section windows whose update time exceeds a second preset value, or
deleting (S28) second road section windows whose maturity levels are lower than a third preset value and whose update time exceeds a fourth preset value, wherein the second preset value is greater than the fourth preset value, and the third preset value is less than the first preset value.

3. The control method of claim 1, wherein the control method comprises:
generating and saving (S31) a new scenario to the scenario road section library when the current positioning route does not match the scenario; and
generating and saving (S33) a new road section window to the scenario when the first road section window does not match the second road section window.

4. A server (20), comprising:
a receiving module (21) configured to receive and save a plurality of corresponding relationships between road section patterns and a positioning route of a vehicle on a map of a parking lot, said plurality of corresponding relationships uploaded by the vehicle, for each of a plurality of positioning routes, and configured to to form a scenario road section library, wherein a road section pattern corresponds to a road section window of a travelled route of the vehicle and wherein the scenario road section library comprises a plurality of scenarios, and each scenario comprises said plurality of corresponding relationships for each respective positioning route;
an acquisition module (23) configured to acquire a current positioning route input by the vehicle, the input including a plurality of corresponding relationships between road section patterns and the current positioning route,
wherein said current positioning route comprises a plurality of first road section windows;
a first matching module (25) configured to compare the current positioning route against each scenario in the scenario road section library based on a position signal of the current positioning route to determine if the current positioning route matches a scenario, wherein the scenario comprises a plurality of second road section windows;
a second matching module (27) configured to compare each of the plurality of first road section windows of the current positioning route against each of the plurality of second road section windows within a scenario when the current positioning route matches the scenario; and
a merging module (29) configured to merge the first road section windows with the second road section windows to update the second road section windows when the first road section windows match the second road section windows;
wherein each of the second road section windows within the scenario has a corresponding maturity level, and the server comprises:
means for comparing in sequence a current second road section window against the remaining second road section windows within the scenario based on the position signal when the sum of the maturity level of the scenario reaches a first preset value; and
means for merging the current second road section window and the second road section window matching the current second road section window to update the scenario when the current second road section window matches one of the remaining second road section windows.

5. The server of claim 4, wherein each of the second road section windows has a corresponding update time, and the server comprises:
means for deleting second road section windows whose update time exceeds a second preset value, or
means for deleting second road section windows whose maturity levels are lower than a third preset value and whose update time exceeds a fourth preset value, wherein the second preset value is greater than the fourth preset value, and the third preset value is less than the first preset value.

6. A computer-readable medium comprising instructions which, when executed by a computer, results in performance of the method steps of any one of claims 1 to 3.

## Patentansprüche

1. Steuerverfahren für einen Server, das Folgendes beinhaltet:
Empfangen und Speichern (S21) einer Mehrzahl von entsprechenden Beziehungen zwischen Straßenabschnittsmustern und einer Positionierungsroute eines Fahrzeugs auf einer Karte eines Parkplatzes, wobei die genannte Mehrzahl von entsprechenden Beziehungen von dem Fahrzeug hochgeladen wird, für jede aus einer Mehrzahl von Positionierungsrouten, wobei ein Straßenabschnittsmuster einem Straßenabschnittsfenster einer gefahrenen Route des Fahrzeugs entspricht;
Bilden einer Szenario-Straßenabschnittsbibliothek, wobei die Szenario-Straßenabschnittsbibliothek eine Mehrzahl von Szenarien umfasst und jedes Szenario die genannte Mehrzahl von entsprechenden Beziehungen für jede jeweilige Positionierungsroute umfasst;
Erfassen (S23) einer aktuellen Positionierungsrouteneingabe durch das Fahrzeug, wobei die Eingabe eine Mehrzahl von entsprechenden Beziehungen zwischen Straßenabschnittsmustern und der aktuellen Positionierungsroute enthält, wobei die genannte aktuelle Positionierungsroute eine Mehrzahl von ersten Straßenabschnittsfenstern umfasst;
Vergleichen (S25) der aktuellen Positionierungsroute mit jedem Szenario in der Szenario-Straßenabschnittsbibliothek auf der Basis eines Positionssignals der aktuellen Positionierungsroute, um festzustellen, ob die aktuelle Positionierungsroute mit einem Szenario übereinstimmt, wobei das Szenario eine Mehrzahl von zweiten Straßenabschnittsfenstern umfasst;
Vergleichen (S27), wenn die aktuelle Positionierungsroute mit einem Szenario übereinstimmt, jedes aus der Mehrzahl von ersten Straßenabschnittfenstern der aktuellen Positionierungsroute mit jedem aus der Mehrzahl von zweiten Straßenabschnittfenstern innerhalb des Szenarios; und
Zusammenführen (S29) der ersten Straßenabschnittfenster mit den zweiten Straßenabschnittfenstern, um die zweiten Straßenabschnittfenster zu aktualisieren, wenn die ersten Straßenabschnittfenster mit den zweiten Straßenabschnittfenstern übereinstimmen;
wobei jedes der zweiten Straßenabschnittsfenster innerhalb des Szenarios einen entsprechenden Reifegrad hat, und das Steuerverfahren Folgendes beinhaltet:
Vergleichen (S22), wenn die Summe des Reifegrads des Szenarios einen ersten Vorgabewert erreicht, eines aktuellen zweiten Straßenabschnittsfensters mit den verbleibenden zweiten Straßenabschnittsfenstern innerhalb des Szenarios auf der Basis des Positionssignals in Folge; und
Zusammenführen (S24), wenn das aktuelle zweite Straßenabschnittsfenster mit einem der verbleibenden zweiten Straßenabschnittsfenster übereinstimmt, des aktuellen zweiten Straßenabschnittsfensters und des zweiten Straßenabschnittsfensters, das mit dem aktuellen zweiten Straßenabschnittsfenster übereinstimmt, um das Szenario zu aktualisieren.

2. Steuerverfahren nach Anspruch 1, wobei jedes der zweiten Straßenabschnittsfenster eine entsprechende Aktualisierungszeit hat und das Steuerverfahren Folgendes beinhaltet:
Löschen (S26) von zweiten Straßenabschnittsfenstern, deren Aktualisierungszeit einen zweiten Vorgabewert überschreitet, oder
Löschen (S28) von zweiten Straßenabschnittsfenstern, deren Reifegrade niedriger als ein dritter Vorgabewert sind und deren Aktualisierungszeit einen vierten Vorgabewert überschreitet, wobei der zweite Vorgabewert größer als der vierte Vorgabewert ist und der dritte Vorgabewert kleiner als der erste Vorgabewert ist.

3. Steuerverfahren nach Anspruch 1, wobei das Steuerverfahren Folgendes beinhaltet:
Erzeugen und Speichern (S31) eines neuen Szenarios in der Szenario-Straßenabschnittsbibliothek, wenn die aktuelle Positionierungsroute nicht mit dem Szenario übereinstimmt; und
Erzeugen und Speichern (S33) eines neuen Straßenabschnittfensters für das Szenario, wenn das erste Straßenabschnittfenster nicht mit dem zweiten Straßenabschnittfenster übereinstimmt.

4. Server (20), der Folgendes umfasst:
ein Empfangsmodul (21), konfiguriert zum Empfangen und Speichern einer Mehrzahl von entsprechenden Beziehungen zwischen Straßenabschnittsmustern und einer Positionierungsroute eines Fahrzeugs auf einer Karte eines Parkplatzes, wobei die genannte Mehrzahl von entsprechenden Beziehungen von dem Fahrzeug hochgeladen wird, für jede aus einer Mehrzahl von Positionierungsrouten, und konfiguriert zum Bilden einer Szenario-Straßenabschnittsbibliothek, wobei ein Straßenabschnittsmuster einem Straßenabschnittsfenster einer gefahrenen Route des Fahrzeugs entspricht und wobei die Szenario-Straßenabschnittsbibliothek eine Mehrzahl von Szenarien umfasst und jedes Szenario die genannte Mehrzahl von entsprechenden Beziehungen für jede jeweilige Positionierungsroute umfasst;
ein Erfassungsmodul (23), konfiguriert zum Erfassen einer aktuellen Positionierungsrouteneingabe durch das Fahrzeug, wobei die Eingabe eine Mehrzahl von entsprechenden Beziehungen zwischen Straßenabschnittsmustern und der aktuellen Positionierungsroute enthält, wobei die genannte aktuelle Positionierungsroute eine Mehrzahl von ersten Straßenabschnittsfenstern umfasst;
ein erstes Abgleichmodul (25), konfiguriert zum Vergleichen der aktuellen Positionierungsroute mit jedem Szenario in der Szenario-Straßenabschnittsbibliothek auf der Basis eines Positionssignals der aktuellen Positionierungsroute, um festzustellen, ob die aktuelle Positionierungsroute mit einem Szenario übereinstimmt, wobei das Szenario eine Mehrzahl von zweiten Straßenabschnittsfenstern umfasst;
ein zweites Abgleichmodul (27), konfiguriert zum Vergleichen jedes aus der Mehrzahl von ersten Straßenabschnittfenstern der aktuellen Positionierungsroute mit jedem aus der Mehrzahl von zweiten Straßenabschnittfenstern innerhalb eines Szenarios, wenn die aktuelle Positionierungsroute mit dem Szenario übereinstimmt; und
ein Zusammenführungsmodul (29), konfiguriert zum Zusammenführen der ersten Straßenabschnittfenster mit den zweiten Straßenabschnittfenstern, um die zweiten Straßenabschnittfenster zu aktualisieren, wenn die ersten Straßenabschnittfenster mit den zweiten Straßenabschnittfenstern übereinstimmen;
wobei jedes der zweiten Straßenabschnittsfenster innerhalb des Szenarios einen entsprechenden Reifegrad hat, und der Server Folgendes umfasst:
Mittel zum Vergleichen eines aktuellen zweiten Straßenabschnittfensters mit den verbleibenden zweiten Straßenabschnittfenstern innerhalb des Szenarios auf der Basis des Positionssignals in Folge, wenn die Summe des Reifegrads des Szenarios einen ersten Vorgabewert erreicht; und
Mittel zum Zusammenführen des aktuellen zweiten Straßenabschnittfensters und des zweiten Straßenabschnittfensters, das mit dem aktuellen zweiten Straßenabschnittfenster übereinstimmt, um das Szenario zu aktualisieren, wenn das aktuelle zweite Straßenabschnittfenster mit einem der verbleibenden zweiten Straßenabschnittfenster übereinstimmt.

5. Server nach Anspruch 4, wobei jedes der zweiten Straßenabschnittsfenster eine entsprechende Aktualisierungszeit hat und der Server Folgendes umfasst:
Mittel zum Löschen von zweiten Straßenabschnittsfenstern, deren Aktualisierungszeit einen zweiten Vorgabewert überschreitet, oder
Mittel zum Löschen von zweiten Straßenabschnittsfenstern, deren Reifegrade niedriger als ein dritter Vorgabewert sind und deren Aktualisierungszeit einen vierten Vorgabewert überschreitet, wobei der zweite Vorgabewert größer als der vierte Vorgabewert ist und der dritte Vorgabewert kleiner als der erste Vorgabewert ist.

6. Computerlesbares Medium, das Befehle enthält, die bei Ausführung durch einen Computer zur Durchführung der Verfahrensschritte nach einem der Ansprüche 1 bis 3 führen.

## Revendications

1. Procédé de commande pour un serveur, comprenant :
une réception et une sauvegarde (S21) d'une pluralité de relations correspondantes entre des profils de tronçons routiers et un itinéraire de positionnement d'un véhicule sur une carte d'un parc de stationnement, ladite pluralité de relations correspondantes étant téléchargée par le véhicule, pour chacun d'une pluralité d'itinéraires de positionnement, dans lequel un profil de tronçon routier correspond à une fenêtre de tronçon routier d'un itinéraire parcouru du véhicule ;
une formation d'une bibliothèque de scénarios de tronçons routiers, dans lequel la bibliothèque de scénarios de tronçons routiers comprend une pluralité de scénarios, et chaque scénario comprend ladite pluralité de relations correspondantes pour chaque itinéraire de positionnement respectif ;
une acquisition (S23) d'un itinéraire de positionnement actuel entré par le véhicule, l'entrée incluant une pluralité de relations correspondantes entre des profils de tronçons routiers et l'itinéraire de positionnement actuel,
dans lequel ledit itinéraire de positionnement actuel comprend une pluralité de premières fenêtres de tronçons routiers ;
une comparaison (S25) de l'itinéraire de positionnement actuel par rapport à chaque scénario dans la bibliothèque de scénarios de tronçons routiers sur la base d'un signal de position de l'itinéraire de positionnement actuel pour déterminer si l'itinéraire de positionnement actuel correspond à un scénario, dans lequel le scénario comprend une pluralité de secondes fenêtres de tronçons routiers ;
lorsque l'itinéraire de positionnement actuel correspond à un scénario, une comparaison (S27) de chacune de la pluralité de premières fenêtres de tronçons routiers de l'itinéraire de positionnement actuel par rapport à chacune de la pluralité de secondes fenêtres de tronçons routiers dans le scénario ; et
une fusion (S29) des premières fenêtres de tronçons routiers avec les secondes fenêtres de tronçons routiers pour mettre à jour les secondes fenêtres de tronçons routiers lorsque les premières fenêtres de tronçons routiers correspondent aux secondes fenêtres de tronçons routiers ;
dans lequel chacune des secondes fenêtres de tronçons routiers dans le scénario présente un niveau de maturité correspondant, et le procédé de commande comprend :
lorsque la somme du niveau de maturité du scénario atteint une première valeur prédéfinie, une comparaison (S22) d'une seconde fenêtre de tronçon routier actuelle par rapport aux secondes fenêtres de tronçons routiers restantes dans le scénario, les unes après les autres, sur la base du signal de position ;
et
lorsque la seconde fenêtre de tronçon routier actuelle correspond à une des secondes fenêtres de tronçons routiers restantes, une fusion (S24) de la seconde fenêtre de tronçon routier actuelle et de la seconde fenêtre de tronçon routier correspondant à la seconde fenêtre de tronçon routier actuelle pour mettre à jour le scénario.

2. Procédé de commande selon la revendication 1, dans lequel chacune des secondes fenêtres de tronçons routiers a un délai de mise à jour correspondant, et le procédé de commande comprend :
une suppression (S26) de secondes fenêtres de tronçons routiers dont le délai de mise à jour dépasse une deuxième valeur prédéfinie, ou
une suppression (S28) de secondes fenêtres de tronçons routiers dont des niveaux de maturité sont inférieurs à une troisième valeur prédéfinie et dont un délai de mise à jour dépasse une quatrième valeur prédéfinie, dans lequel la deuxième valeur prédéfinie est supérieure à la quatrième valeur prédéfinie, et la troisième valeur prédéfinie est inférieure à la première valeur prédéfinie.

3. Procédé de commande selon la revendication 1, dans lequel le procédé de commande comprend :
une génération et une sauvegarde (S31) d'un nouveau scénario dans la bibliothèque de scénarios de tronçons routiers lorsque l'itinéraire de positionnement actuel ne correspond pas au scénario ; et
une génération et une sauvegarde (S33) d'une nouvelle fenêtre de tronçon routier dans le scénario lorsque la première fenêtre de tronçon routier ne correspond pas à la seconde fenêtre de tronçon routier.

4. Serveur (20), comprenant :
un module de réception (21) configuré pour recevoir et sauvegarder une pluralité de relations correspondantes entre des profils de tronçons routiers et un itinéraire de positionnement d'un véhicule sur une carte d'un parc de stationnement, ladite pluralité de relations correspondantes étant téléchargée par le véhicule, pour chacun d'une pluralité d'itinéraires de positionnement, et configuré pour former une bibliothèque de scénarios de tronçons routiers, dans lequel un profil de tronçon routier correspond à une fenêtre de tronçon routier d'un itinéraire parcouru du véhicule et dans lequel la bibliothèque de scénarios de tronçons routiers comprend une pluralité de scénarios, et chaque scénario comprend ladite pluralité de relations correspondantes pour chaque itinéraire de positionnement respectif ;
un module d'acquisition (23) configuré pour acquérir un itinéraire de positionnement actuel entré par le véhicule, l'entrée incluant une pluralité de relations correspondantes entre des profils de tronçons routiers et l'itinéraire de positionnement actuel,
dans lequel ledit itinéraire de positionnement actuel comprend une pluralité de premières fenêtres de tronçons routiers ;
un premier module de mise en correspondance (25) configuré pour comparer l'itinéraire de positionnement actuel par rapport à chaque scénario dans la bibliothèque de scénarios de tronçons routiers sur la base d'un signal de position de l'itinéraire de positionnement actuel pour déterminer si l'itinéraire de positionnement actuel correspond à un scénario, dans lequel le scénario comprend une pluralité de secondes fenêtres de tronçons routiers ;
un second module de mise en correspondance (27) configuré pour comparer chacune de la pluralité de premières fenêtres de tronçons routiers de l'itinéraire de positionnement actuel par rapport à chacune de la pluralité de secondes fenêtres de tronçons routiers dans un scénario lorsque l'itinéraire de positionnement actuel correspond au scénario ; et
un module de fusion (29) configuré pour fusionner les premières fenêtres de tronçons routiers avec les secondes fenêtres de tronçons routiers pour mettre à jour les secondes fenêtres de tronçons routiers lorsque les premières fenêtres de tronçons routiers correspondent aux secondes fenêtres de tronçons routiers ;
dans lequel chacune des secondes fenêtres de tronçons routiers dans le scénario présente un niveau de maturité correspondant, et le serveur comprend :
un moyen de comparaison d'une seconde fenêtre de tronçon routier actuelle par rapport aux secondes fenêtres de tronçons routiers restantes dans le scénario, les unes après les autres, sur la base du signal de position lorsque la somme du niveau de maturité du scénario atteint une première valeur prédéfinie ; et
un moyen de fusion de la seconde fenêtre de tronçon routier actuelle et de la seconde fenêtre de tronçon routier correspondant à la seconde fenêtre de tronçon routier actuelle pour mettre à jour le scénario lorsque la seconde fenêtre de tronçon routier actuelle correspond à une des secondes fenêtres de tronçons routiers restantes.

5. Serveur selon la revendication 4, dans lequel chacune des secondes fenêtres de tronçons routiers présente un délai de mise à jour correspondant, et le serveur comprend :
un moyen de suppression de secondes fenêtres de tronçons routiers dont un délai de mise à jour dépasse une deuxième valeur prédéfinie, ou
un moyen de suppression de secondes fenêtres de tronçons routiers dont des niveaux de maturité sont inférieurs à une troisième valeur prédéfinie et dont un délai de mise à jour dépasse une quatrième valeur prédéfinie, dans lequel la deuxième valeur prédéfinie est supérieure à la quatrième valeur prédéfinie, et la troisième valeur prédéfinie est inférieure à la première valeur prédéfinie.

6. Support lisible par ordinateur comprenant des instructions qui, lorsqu'elles sont exécutées par un ordinateur, résultent en une réalisation des étapes de procédé selon l'une quelconque des revendications 1 à 3.
